# EUROPEAN PATENT APPLICATION

(11) **EP 1 582 558 A1**
(43) Date of publication of application: **05.10.2005**
(21) Application number: 03786352.9
(22) Date of filing: 26.12.2003
(51) Int. Cl.: C08J 9/32

(54) **EXPANDABLE RESIN COMPOSITION**

(30) Priority: 06.01.2003 JP 2003000540
(71) Applicant: SEKISUI CHEMICAL CO., LTD., Osaka 530-8565 (JP)
(72) Inventor: YAMAUCHI, Hiroshi, Sekisui Chemical Co., Ltd., Shunan-shi, Yamaguchi 746-0006 (JP); KAWAGUCHI, Yasuhiro, Tokuyama Sekisui Co., Ltd., Shunan-shi, Yamaguchi 746-0006 (JP)
(74) Representative: Hart Davis, Jason
(86) International application number: PCT/JP2003/016907
(87) International publication number: WO 2004/060986

(57) **Abstract**

It is an object of the present invention to provide a foamable resin composition giving a foamed body with high foaming magnification and having uniform and closed cells.

The present invention relates to a foamable resin composition, which comprises a thermal expandable microcapsule and a resin composition, the thermal expandable microcapsule having a temperature of starting thermal expansion less than a temperature of starting curing of the resin composition plus 10°C.

## Description

### TECHNICAL FIELD

The present invention relates to a foamable resin composition giving a foamed body with high foaming magnification and having uniform and closed cells.

### BACKGROUND ART

To make a coating material and a plastic product lightweight, a foamed body produced from a foamable resin composition has widely been used and a thermally decomposable chemical foaming agent has been used for such a foamable resin composition.

However, if such a thermally decomposable chemical foaming agent is used, the cells form open cells and therefore, there occurs problem that a produced foamed body is easy to be penetrated with water and is insufficient in the strength.

On the other hand, as a resin composition having thermal foamable property, a foamable resin composition containing thermal expandable microcapsules has been known well. However, a conventionally used foamable resin composition containing thermal expandable microcapsules is difficult to obtain a foamed body with high magnification and to carry out foaming at high magnification, it is required to add a large quantity of thermal expandable microcapsules to the composition.

Therefore, in order to make a foamable resin composition which is capable of foaming at high magnification available, investigations on improvement of the expansion ratio of the thermal expandable microcapsules have been carried out, however in the case of using thermal expandable microcapsules with high expansion ratio, it has resulted in problems on obtained foamed bodies that some of the foamed bodies have partially locally foamed portions or that others are cracked.

### SUMMARY OF THE INVENTION

In view of the state of the art, it is an object of the present invention to provide a foamable resin composition giving a foamed body at a high foaming magnification and containing uniform and closed cells.

The present invention provides a foamable resin composition which comprises a thermal expandable microcapsule and a resin composition and the thermal expandable microcapsule have a temperature of starting thermal expansion less than a temperature of starting curing of the resin composition plus 10°C. With respect to the foamable resin composition of the present invention, the thermal expandable microcapsule is preferable to have a temperature of the maximum thermal expansion less than a temperature of starting curing of the resin composition plus 60°C.

In the present invention, the resin composition is preferably plastisol and the plastisol is preferable to contain a vinyl chloride resin or an acrylic resin. Further, the resin composition is preferable to contain a thermosetting resin.

### DETAILED DESCRIPTION OF THE INVENTION

Hereinafter, the present invention will be described more in detail.

The present inventors have supposed that the impossibility for a conventional foamable resin composition containing thermal expandable microcapsules to foam at high magnification is attributed to the curing behavior of the resin composition and have found as a result of an intense study that in the conventional foamable resin composition, expansion of the thermal expandable microcapsules starts after the resin composition has cured and therefore, the expansion of the thermal expandable microcapsules is suppressed by already cured resin composition. The present inventors have also found that if the thermal expandable microcapsules are going to expand after the resin composition has cured, the resulting foamed body is deteriorated and cracked by the pressure.

Accordingly, the present inventors have found as a result of a further intense study that it is possible to obtain a foamed body at high foaming magnification and free from cracking by using a foamable resin composition having a prescribed correlation between the curing characteristic of the resin composition and the thermal expansion characteristic of the thermal expandable microcapsules. That is, it is possible to obtain a foamable resin composition from which a foamed body with high foaming magnification and free from cracking can be produced by combining a resin composition and thermal expandable microcapsules satisfying the following conditions:
1) at the time of heating, the thermal expandable microcapsules start expanding before the resin composition is cured:
2) after the resin composition starts curing, the thermal expandable microcapsules are not so much expanded to an excess extent.

The foamable resin composition of the present invention comprises the thermal expandable microcapsules and the resin composition and is characterized in that the thermal expandable microcapsules have a temperature of starting thermal expansion less than a temperature of starting curing of the resin composition plus 10°C.

The foamable resin composition of the present invention comprises the thermal expandable microcapsules and the resin composition.

The thermal expandable microcapsules are not particularly limited and microcapsules obtained by enclosing a volatile expanding agent in a thermoplastic resin can be exemplified.

The resin composition is not particularly limited and plastisol and curable resin compositions containing thermosetting resins such as an epoxy resin, a melamine resin and the like can be exemplified.

The plastisol is not particularly limited and vinyl chloride plastisol, acrylic plastisol and the like can be exemplified. The plastisol means a sol-state mixture obtained by mixing a plasticizer and the like to a thermoplastic resin. The plastisol can become gel owing to impregnation of the plasticizer and can form a coating.

The thermal expandable microcapsules have a temperature of starting thermal expansion less than a temperature of starting curing of the resin composition plus 10°C. If the temperature of starting thermal expansion is not less than the temperature of starting curing of the resin composition plus 10°C, the thermal expandable microcapsules start expanding after the resin composition is cured and therefore, the expansion of the thermal expandable microcapsules is suppressed by the already cured resin composition or foaming starts after the resin composition is cured and consequently, the produced foamed body could be deteriorated or cracked.

The temperature of the maximum thermal expansion of the thermal expandable microcapsules is preferably less than a temperature of starting curing of the resin composition plus 60°C. If the temperature of the maximum thermal expansion of the thermal expandable microcapsules is not less than the temperature of starting curing of the resin composition plus 60°C, high pressure owing to the thermal expansion of the thermal expandable microcapsules is continuously applied even after the curing of the resin composition to result in deterioration and crack formation of the produced foamed body in some cases.

The temperature of starting curing of the resin composition means the temperature at which the melt viscosity starts increasing in the case the resin composition is plastisol and the temperature at which the curing starts in the case the resin composition is a curable resin composition. The temperature of starting curing is determined depending on components contained in the resin composition and for example, in the case the plastisol is vinyl chloride plastisol, it is 120 to 130°C and in the case the curable resin composition contains an epoxy resin, it is 120 to 130°C.

The temperature of starting curing of the plastisol can be measured by measuring the elasticizing points from the tensile strength of sample films and employing a thermal bench method for the respective temperatures. Also, the temperature of starting curing of the curable resin composition can be measured by measuring viscoelasticity spectra showing the temperature at which the elongation and elasticity are increased.

The temperature at which the thermal expandable microcapsules start thermal expansion (the temperature of starting thermal expansion) means the temperature at which the thermal expandable microcapsules practically start expanding thermally and the temperature of the maximum thermal expansion of the thermal expandable microcapsules means the temperature at which the thermal expandable microcapsules are practically not expanded any further but rather start shrinking even by heating.

The measurement of the temperature of starting thermal expansion and the temperature of the maximum thermal expansion can be carried out with "Thermomechanical Analyzer (TMA)" manufactured by TA Instruments Corp. by setting thermal expandable microcapsules 250 µg in a cylindrical container with 7 mm diameter and 1 mm depth made of aluminum, heating them at 5°C/min temperature increasing speed from 80°C to 220°C under condition of pressurizing at 0.1 N from the top, and measuring the vertical displacement of a pressurized terminal. In this case, the temperature at which the displacement starts to be observed is defined as the temperature of starting thermal expansion (Ts) and the temperature at which the displacement becomes the maximum is defined as the temperature of the maximum thermal expansion (Tmax).

The content of the thermal expandable microcapsules in the foamable resin composition of the present invention is preferably 0.01 to 10 parts by weight to 100 parts by weight of the resin composition. If it is less than 0.01 part by weight, the effect to make the foamed body to be obtained lightweight is sometimes insufficient and if it is more than 10 parts by weight, the strength of the foamed body to be obtained is sometimes insufficient.

The foamable resin composition of the present invention may contain conventionally known additives to be added to common foamed bodies such as a filler, e.g. calcium carbonate, a plasticizer, e.g. dioctyl phthalate, a coloring agent, and the like to an extent that the effects of the present invention are not inhibited.

### BEST MODES FOR CARRYING OUT THE INVENTION

Hereinafter, the present invention will be described more in detail by way of examples, but the present invention is not be limited to these examples.

### (Example 1)

A foamed sheet was obtained by heating, at 200°C for 1 minute in a hot air oven, a resin sheet comprising a foamable resin composition obtained by mixing plastisol (having the temperature of starting curing of 125°C) containing calcium carbonate 50 parts by weight, dioctyl phthalate (a plasticizer) 80 parts by weight, and a stabilizer 2 parts by weight and thermal expandable microcapsules (having 0°C difference between the temperature of starting curing and the temperature of starting thermal expansion and 45°C difference between the temperature of starting curing and the temperature of the maximum thermal expansion) 5 parts by weight with a vinyl chloride resin (polymerization degree 800 to 900) for a paste 100 part by weight.

The temperature of starting curing of the plastisol was measured by measuring the elasticizing points from the tensile strength of sample films and employing a thermal bench method for the respective temperatures.

Also, the temperature of starting thermal expansion and the temperature of the maximum thermal expansion were measured using "Thermomechanical Analyzer (TMA)" manufactured by TA Instruments Corp. by setting thermal expandable microcapsules 250 µg in a cylindrical container with 7 mm diameter and 1 mm depth made of aluminum; heating them at 5°C/min temperature increasing speed from 80°C to 220°C under condition of pressurizing at 0.1 N from the top; and measuring the vertical displacement of a pressurized terminal.

### (Comparative Example 1)

A foamed sheet was obtained in the same manner as Example 1, except that thermal expandable microcapsules having 15°C difference between the temperature of starting curing and the temperature of starting thermal expansion and 55°C difference between the temperature of starting curing and the temperature of the maximum thermal expansion. Additionally, the temperature of starting curing, the temperature of starting thermal expansion, and the temperature of the maximum thermal expansion were measured by the same methods as those in Example 1.

### (Example 2)

A foamed sheet was obtained by heating, at 150°C for 20 minutes in a hot air oven, a resin sheet comprising a foamable resin composition obtained by mixing vinyl chloride plastisol 100 parts by weight (having the temperature of starting curing of 125°C) containing a vinyl chloride for a paste, a vinyl chloride-vinyl acetate copolymer for a paste, a plasticizer, and a filler with thermal expandable microcapsules 1 part by weight which have 0°C difference between the temperature of starting curing and the temperature of starting thermal expansion and 45°C difference between the temperature of starting curing and the temperature of the maximum thermal expansion. The temperature of starting curing, the temperature of starting thermal expansion, and the temperature of the maximum thermal expansion were measured by the same methods as those in Example 1.

### (Comparative Example 2)

A foamed sheet was obtained in the same manner as Example 2, except that thermal expandable microcapsules having 23°C difference between the temperature of starting curing and the temperature of starting thermal expansion and 55°C difference between the temperature of starting curing and the temperature of the maximum thermal expansion. The temperature of starting curing, the temperature of starting thermal expansion, and the temperature of the maximum thermal expansion were measured by the same methods as those in Example 1.

### (Example 3)

A foamed sheet was obtained by heating, at 180°C for 30 minutes in a hot air oven, a resin sheet comprising a foamable resin composition obtained by adding thermal expandable microcapsules 3 part by weight which have 0°C difference between the temperature of starting curing and the temperature of starting thermal expansion and 45°C difference between the temperature of starting curing and the temperature of the maximum thermal expansion to an epoxy resin composition 100 parts by weight (having 125°C as the temperature of starting curing) containing a modified epoxy resin, a bisphenol A type epoxy resin, a stabilizer, and a vinyl chloride resin. The temperature of starting curing of the epoxy resin composition was measured by measuring the viscoelasticity spectra showing the temperature at which the elongation and elasticity are increased. Also, the temperature of starting thermal expansion and the temperature of the maximum thermal expansion were measured by the same methods as those in Example 1.

### (Comparative Example 3)

A foamed sheet was obtained in the same manner as Example 3, except that thermal expandable microcapsules having 23°C difference between the temperature of starting curing and the temperature of starting thermal expansion and 55°C difference between the temperature of starting curing and the temperature of the maximum thermal expansion. The temperature of starting curing was measured by the same method as Example 3 and the temperature of starting thermal expansion and the temperature of the maximum thermal expansion were measured by the same methods as those in Example 1.

With respect to the foamed sheets obtained in Examples and Comparative Examples, the foaming magnifications were calculated by comparison of the thickness before and after foaming and shown in Table 1.

**Table 1**

| | Resin composition | | Thermally expansive microcapsules | | Foaming magnification (%) |
|---|---|---|---|---|---|
| | composition | temperature of starting curing (°C) | difference between Ts and temperature of starting curing of starting curing | difference between Tmax and of temperature of starting curing | |
| Example 1 | vinyl chloride plastisol | 125 | 0°C (Ts=125°C) | +45°C (Tmax=170°C) | 200 |
| Comparative Example 1 | vinyl chloride plastisol | 125 | +15°C (Ts=140°C) | +55°C (Tmax=180°C) | 150 |
| Example 2 | vinyl chloride plastisol | 125 | 0°C (Ts=125°C) | +45°C (Tmax=170°C) | 35 |
| Comparative Example 2 | vinyl chloride plastisol | 125 | +23°C (Ts=148°C) | +55°C (Tmax=180°C) | 10 |
| Example 3 | epoxy resin composition | 125 | 0°C (Ts=125°C) | +45°C (Tmax=170°C) | 200 |
| Comparative Example 3 | epoxy resin composition | 125 | +23°C (Ts=148°C) | +55°C (Tmax=180°C) | 140 |
| Ts: temperature of starting thermal expansion | | | | | |
| Tmax: temperature of maximum thermal expansion | | | | | |

### INDUSTRIAL APPLICABILITY

The present invention provides a foamable resin composition giving a foamed body with high foaming magnification and having uniform and closed cells.

## Claims

1. A foamable resin composition,
which comprises a thermal expandable microcapsule and a resin composition, the thermal expandable microcapsule having a temperature of starting thermal expansion less than a temperature of starting curing of the resin composition plus 10°C.

2. The foamable resin composition according to claim 1,
wherein the thermal expandable microcapsule has a temperature of the maximum thermal expansion less than a temperature of starting curing of the resin composition plus 60°C.

3. The foamable resin composition according to claim 1 or 2,
wherein the resin composition is plastisol.

4. The foamable resin composition according to claim 3,
wherein the plastisol contains a vinyl chloride resin or an acrylic resin.

5. The foamable resin composition according to claim 1 or 2,
wherein the resin composition contains a thermosetting resin.
